# EUROPEAN PATENT APPLICATION

(11) **EP 3 176 744 A1**
(43) Date of publication of application: **07.06.2017**
(21) Application number: 15828245.9
(22) Date of filing: 10.07.2015
(51) Int. Cl.: G06Q 30/02, G06Q 10/04, G06Q 50/32

(54) **BEHAVIORAL FEATURE PREDICTION SYSTEM, BEHAVIORAL FEATURE PREDICTION DEVICE, METHOD AND PROGRAM**

(30) Priority: 31.07.2014 US 201462031296 P
(71) Applicant: NEC Corporation, Tokyo 108-8001 (JP)
(72) Inventor: MURAOKA, Yusuke, Tokyo 108-8001 (JP); FUJIMAKI, Ryohei, Tokyo 108-8001 (JP); AKIMOTO, Ichirou, Tokyo 108-8001 (JP)
(74) Representative: Vossius & Partner Patentanwälte Rechtsanwälte mbB
(86) International application number: PCT/JP2015/003503
(87) International publication number: WO 2016/017086

(57) **Abstract**

A feature calculation unit 81 calculates a feature that is likely to influence cancellation by a user based on a communication state log that indicates a communication state of a base station when the user has been engaged in communication or making a call. A learning device 82 learns a model representing a behavioral characteristic of the user by using the calculated feature as an explanatory variable. A prediction device 83 predicts the behavioral characteristic of the user using the feature generated from the communication state log and the model.

## Description

### Technical Field

The present invention relates to a behavioral characteristic prediction system, a behavioral characteristic prediction device, a method of learning behavioral characteristic prediction, a method of predicting a behavioral characteristic, and a behavioral characteristic prediction program that predict a behavioral characteristic of a user.

### Background Art

Telecommunications companies that provide communication service provide various types of communication service in order to acquire customers. Telecommunications companies predict customers who are likely to cancel a contract or customers having a low level of satisfaction with respect to communication service or implement various countermeasures to those customers in order to avoid cancellation by customers already acquired.

PTL 1 describes a method of supporting cancellation prediction to predict a customer who is likely to cancel a contract. In the method described in PTL 1, customers are classified into a plurality of customers by using a utilization detail data including duration of communication, a contact, call charge, or other items related to each call. Based on a listing rule prepared for each call pattern of customers and the classification result of the customers, a customer who is likely to cancel a contract is determined from among the plurality of customers.

### Citation List

### Patent Literature

PTL 1: Japanese Patent Application Laid-Open No. 2002-334200

### Summary of Invention

### Technical Problem

In the method described in PTL 1, a customer who is likely to cancel a contract is determined according to call history of each customer. However, call history is information representing a result of actions of a customer and thus may not sufficiently represent the level of satisfaction of the customer.

For example, even a customer who frequently makes a call may change a telecommunications company in search of better communication service. Meanwhile, even a customer with a low frequency of making a call may maintain a contract if the customer does not feel unsatisfied with the current service. In order to perform cancellation prediction of a customer, therefore, it is desired to perform prediction not by paying attention only to call history of the customer but also by reflecting a state of service quality provided according to communication or a call by the customer.

Therefore, the main object of the present invention is to provide a behavioral characteristic prediction system, a behavioral characteristic prediction device, a method of learning behavioral characteristic prediction, a method of predicting a behavioral characteristic, and a behavioral characteristic prediction program each capable of behavioral characteristic prediction reflecting a service state provided to a user.

### Solution to Problem

A behavioral characteristic prediction system according to the present invention includes: a feature calculation unit that calculates a feature that is likely to influence cancellation by a user based on a communication state log that indicates a communication state of a base station when the user has been engaged in communication or making a call; a learning device that learns a model representing a behavioral characteristic of the user by using the calculated feature as an explanatory variable; and a prediction device that predicts the behavioral characteristic of the user using the feature generated from the communication state log and the model.

A behavioral characteristic prediction device according to the present invention includes a prediction unit that predicts a behavioral characteristic of a user based on a feature calculated based on a communication state log that indicates a communication state of a base station when the user has been engaged in communication or making a call and a model representing a behavioral characteristic of the user learned by using the calculated feature as an explanatory variable.

A method of learning a behavioral characteristic prediction model according to the present invention includes the steps of: calculating a feature that is likely to influence cancellation by a user based on a communication state log that indicates a communication state of a base station when the user has been engaged in communication or making a call; and learning a prediction model by using the calculated feature as an explanatory variable and a behavioral characteristic of the user as an objective variable.

A method of predicting a behavioral characteristic according to the present invention includes the step of predicting a behavioral characteristic of a user based on a feature calculated based on a communication state log that indicates a communication state of a base station when the user has been engaged in communication or making a call and a model representing a behavioral characteristic of the user learned by using the calculated feature as an explanatory variable.

A behavioral characteristic prediction model learning program according to the present invention for causing a computer to execute: feature calculation processing for calculating a feature that is likely to influence cancellation by a user based on a communication state log that indicates a communication state of a base station when the user has been engaged in communication or making a call; learning processing for learning a prediction model by using the calculated feature as an explanatory variable and a behavioral characteristic of the user as an objective variable; and output processing for outputting the prediction model that predicts the behavioral characteristic of the user using the feature generated from the communication state log.

A behavioral characteristic prediction program according to the present invention for causing a computer to execute prediction processing for predicting a behavioral characteristic of a user based on a feature calculated based on a communication state log that indicates a communication state of a base station when the user has been engaged in communication or making a call and a model representing a behavioral characteristic of the user learned by using the calculated feature as an explanatory variable.

### Advantageous Effects of Invention

The present invention achieves technical effects that the technical means described above allow for behavioral characteristic prediction reflecting a service state provided to a user.

### Brief Description of Drawings

[Fig. 1] It depicts a block diagram illustrating an exemplary configuration of a first exemplary embodiment of a behavioral characteristic prediction system of the present invention.
[Fig. 2] It depicts an explanatory diagram illustrating exemplary operations of communication processing.
[Fig. 3] It depicts a flowchart illustrating exemplary operations for generating a prediction model.
[Fig. 4] It depicts a flowchart illustrating exemplary operations for performing behavioral characteristic prediction using a prediction model.
[Fig. 5] It depicts an explanatory diagram illustrating an example of outputting information of base stations.
[Fig. 6] It depicts an explanatory diagram illustrating an example of outputting base stations and travelling routes of users.
[Fig. 7] It depicts an explanatory diagram illustrating an example of outputting relation between base stations and addresses of users.
[Fig. 8] It depicts an explanatory diagram illustrating another example of outputting relation between base stations and addresses of users.
[Fig. 9] It depicts a block diagram illustrating an overview of a behavioral characteristic prediction system of the present invention.
[Fig. 10] It depicts a block diagram illustrating an overview of a behavioral characteristic prediction device of the present invention.
[Fig. 11] It depicts a block diagram illustrating an overall configuration of a computer.

### Description of Embodiments

Exemplary embodiments of the present invention will be described below with reference to the drawings.

### First Exemplary Embodiment

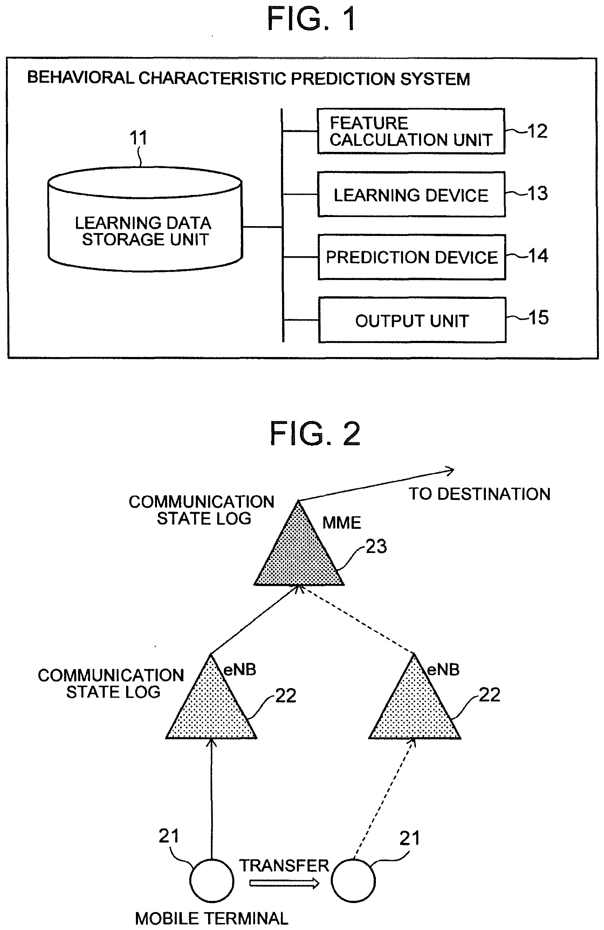

Fig. 1 depicts a block diagram illustrating an exemplary configuration of a first exemplary embodiment of a behavioral characteristic prediction system of the present invention. A behavioral characteristic prediction system of the present exemplary embodiment includes a learning data storage unit 11, a feature calculation unit 12, a learning device 13, a prediction device 14, and an output unit 15. Note that in the descriptions below an example of cancellation by a user is described as a behavioral characteristic of the user; however, a behavioral characteristic of a user may also include the level of dissatisfaction of the user with respect to service.

The learning data storage unit 11 stores learning data for predicting a behavioral characteristic of a user. When a user of a cellular phone agrees with discloser of personal information for example, learning a cancellation prediction model using the information of the user allows for providing a campaign or service appropriate for the user.

In the present exemplary embodiment, a user corresponds to a customer. The feature calculation unit 12 will be described later. The feature calculation unit 12 calculates a feature that is likely to influence cancellation by the user using this learning data. In the present exemplary embodiment, used as information for calculating a feature that is likely to influence cancellation by the user is a communication state log that indicates a communication state of a base station when the user has been engaged in communication or making a call. That is, this communication state log can be referred to as data for specifying what type of transaction has occurred in communication with which base station.

Examples of the communication state log include a call trace log (CTL) for example. The CTL is information collected by each base station and includes an attribute representing contents of communication carried out with a communication terminal or an attribute representing a communication state of the base station itself. Note that the communication state log may also include positional information of each base station or positional information of a source communication terminal.

Fig. 2 depicts an explanatory diagram illustrating exemplary operations of communication processing. The example illustrated in Fig. 2 illustrates a network environment of long term evolution (LTE). In the network environment exemplified in Fig. 2, a mobile terminal 21 communicates with an e node B (eNB, base station device) 22 and the eNB 22 communicates with a mobility management entity (MME) 23. According to transfer of the mobile terminal 21, the eNB 22 that communicates therewith also changes.

In the example illustrated in Fig. 2, due to transfer of the mobile terminal 21 that has been communicating with a destination via a communication network illustrated in a solid line, the eNB 22 with which the mobile terminal 21 communicates changes. After the change, the mobile terminal 21 communicates with the destination via a communication network illustrated in a broken line.

Each of the eNBs 22 and the MME 23 exemplified in Fig. 2 acquires a communication state log. The communication state log acquired here is stored in the learning data storage unit 11. The eNB 22 and the MME 23 acquire, for each communication, the communication state log indicating a communication state such as a user, a bandwidth, and power. That is, the communication state log includes information representing a communication state such as a frequency band used, a communication traffic volume, power, or other items with respect to each communication the user is engaged in with each of the eNBs 22 or each MME 23.

Note that the communication state log may also include information representing a communication state of a base station at a certain time point. The communication state log may also include the number of terminals concurrently connected with a base station at a certain time point or average power, for example. The number of terminals concurrently connected may include not only the number of terminals actually connected but also the number of terminals that fails in communication despite connection request.

That is, the communication state log may include not only information representing contents of transaction occurring when the user is engaged in communication or making a call but also include a communication state of the base station when the transaction has occurred.

The learning data storage unit 11 stores information representing a behavioral characteristic of a user. Specifically, the learning data storage unit 11 may store information for specifying a user who has cancelled a contract in the past. The learning data storage unit 11 may store the level of dissatisfaction of the user, who has not yet canceled a contract, with respect to service sampled in a questionnaire or the like as the information representing a behavioral characteristic of the user.

The feature calculation unit 12 calculates a feature that is likely to influence cancellation by the user based on the learning data stored in the learning data storage unit 11. Specifically, the feature calculation unit 12 calculates a feature that is likely to influence cancellation by the user based on the communication state log that indicates the communication state of a base station when the user has been engaged in communication or making a call.

The feature may be an attribute itself included in the communication state log or a statistic calculated based on this attribute. That is, this feature may have any contents as long as the value is assumed to possibly influence cancellation by a user and is considered in advance by the user or others.

An exemplary feature calculated by the feature calculation unit 12 will be specifically described below.

First, a first feature includes a statistic of collected communication states when each user has been engaged in communication or making a call. The feature calculation unit 12 calculates, for each user for example, as statistics of communication states, an average or standard deviation of a frequency band used for communication or a difference from an assumed average frequency band.

For example, it is assumed that a user is more satisfied with service when connection is better and that the level of dissatisfaction with respect to the service is low when an average frequency band assumed according to a plan subscribed by the user is satisfied. The feature calculated in this manner represents quality of service experienced by the user engaged in communication or making a call.

Next, a second feature includes a statistic of collected communication states of a connected base station assumed from transfer history of the user. The feature calculation unit 12 specifies, in time series, a base station to which the user is connected and calculates a communication state of the base station at specified time as the feature.

Here, the feature calculation unit 12 calculates, as the feature of the communication state of the base station, statistics of time series information such as the number of concurrent connections to the base station, power used in the base station, a degree of tightness of a frequency band used by the base station, or other information. The feature calculated in this manner represents how it is difficult to be connected to the base station.

Abase station to which a user is connected may be specified, for example, as a base station assumed from a position of the user that is acquired by the global positioning system (GPS) or may be specified based on connection history of the user with respect to base stations. In this manner, the feature calculation unit 12 calculates for each user a time series of communication states of the base station to which the user is connected and calculates its statistics as the feature.

For example, when only communication history between the user and base stations is noted, communication history where connection to a base station has failed does not remain and thus it is difficult to specify information of a base station to be noted. The second feature is, however, calculated based on the transfer history or the connection history of the user and thus a base station to which the user has tried to make connection and failed can be estimated. Therefore, utilizing information on such a base station allows for effectively predicting a behavioral characteristic.

Next, a third feature includes time series information of a communication state in a series of service. The feature calculation unit 12 specifies a series of service that the user is engaged by using a call detail record (CDR) which is a detailed call record and the communication state log.

As exemplified in Fig. 2, a communication terminal may be connected to a plurality of base stations. For example, when a user is watching a video on a train via a base station, a base station used changes according to variations in the position of the user. In such a case, even when a series of service is used the CTL may be split into multiple CTLs. Using the CDR, however, allows for specifying a call or a function performed by an application.

Note that a series of service means a unit recognized by a user as processing of one time such as a call and a unit of processing defined for each application. In the case of a call, for example, the feature calculation unit 12 may specify from the start to the end of a call as a series of service. The feature calculation unit 12 may alternatively specify from activation to deactivation of an application as a series of service.

For example, when a communication state is deteriorated while a video is viewed, this may influence use feeling of the user. The feature calculated in this manner represents a degree of variation in a communication state of communication or a call experienced by the user. The feature calculation unit 12 may calculate, as the feature, time series information of a communication state or its statistic such as an average or the level of variations in communication speed or the number of times when the communication speed has fallen below a certain criteria for each unit function performed by each user, for example.

Next, a fourth feature includes a statistic of collected time periods during which each of the users has failed in communication with a base station. Specifically, the feature calculation unit 12 calculates for each user, as the statistic of a communication state, the total sum of time periods during which the communication state log does not exist. The feature calculation unit 12 may calculate, as the feature, the total sum of periods during which an interval between acquired communication state logs is more than or equal to a predetermined period.

For example, when a communication state log of a user is not acquired by a base station, the user may have been out of an area of the base station. The longer this period is, the longer a time period during which the user has failed in communication or making a call and thus the feature calculated in this manner represents a degree of unavailability of service of the user.

Any of the features described above may influence cancellation by a user. Note that the feature calculated by the feature calculation unit 12 is not limited to the above four features. The feature calculation unit 12 calculates one or more of the aforementioned features, for example.

The learning device 13 learns a model representing a behavioral characteristic of a user by using the calculated feature as an explanatory variable. Specifically, the learning device 13 learns a cancellation model of a user by using information representing cancellation by the user as an objective variable and the feature calculated by the feature calculation unit 12 as an explanatory variable.

A method by which the learning device 13 learns the model may be in any way and includes various methods such as regression analysis or discrimination analysis. The learning device 13 is only required to select an appropriate method of learning according to the objective variable.

The prediction device 14 predicts a behavioral characteristic of the user using the feature generated from the communication state log. The prediction device 14 uses, for example, information representing cancellation by the user as the objective variable and a feature generated based on a communication state log acquired by each base station as the explanatory variable for predicting cancellation by the user.

Specifically, the feature calculation unit 12 calculates the feature using a communication state log of a user who is a prediction target. The prediction device 14 predicts a behavioral characteristic of the prediction target user using the model learned by the learning device 13 and the feature of the prediction target user.

In this manner, in the present exemplary embodiment, the prediction device 14 predicts the behavioral characteristic of the user based on the communication state log that indicates a communication state of a base station. This allows for predicting a behavioral characteristic including an availability state of a user with respect to service which cannot be determined only by communication history, thereby allowing for further improving accuracy of prediction.

Therefore, if there is a user who clearly expresses the intent of receiving appropriate service using personal information, it is difficult for a telecommunications company to grasp the level of dissatisfaction with respect to service provided to the user only from general communication history. It was therefore difficult to appropriately attend to such a user.

In the present exemplary embodiment, however, the feature calculation unit 12 calculates a feature that is likely to influence cancellation by a user based on a communication state log. The feature calculated in this manner represents an availability state of the user who receives service provision. The prediction device 14 further predicts a behavioral characteristic using the learned model and this feature as an explanatory variable. The telecommunications company can provide such service that mitigates dissatisfaction of terminators while users can receive more desirable service provision.

The output unit 15 outputs the prediction result by the prediction device 14. The output unit 15 may output a list of top users having a high possibility of cancellation, for example. The output unit 15 may further output information of a base station having high frequency of use by the user having a high possibility of cancellation. Note that contents output by the output unit 15 are not limited to the aforementioned contents. The output unit 15 is only required to output any information related to behavioral characteristic prediction. Moreover, the output unit 15 may output the prediction model itself.

The feature calculation unit 12, the learning device 13, the prediction device 14, and the output unit 15 are implemented by a CPU of a computer that operates according to a program (behavioral characteristic prediction model learning program or behavioral characteristic prediction program). For example, the program is stored in a storage (not illustrated) in the behavioral characteristic prediction system. The CPU may read the program and thereby operate as the feature calculation unit 12, the learning device 13, the prediction device 14, and the output unit 15 according to the program.

Alternatively, each of the feature calculation unit 12, the learning device 13, the prediction device 14, and the output unit 15 may be implemented by separate dedicated hardware. The learning data storage unit 11 is implemented by a magnetic disc, or other media for example.

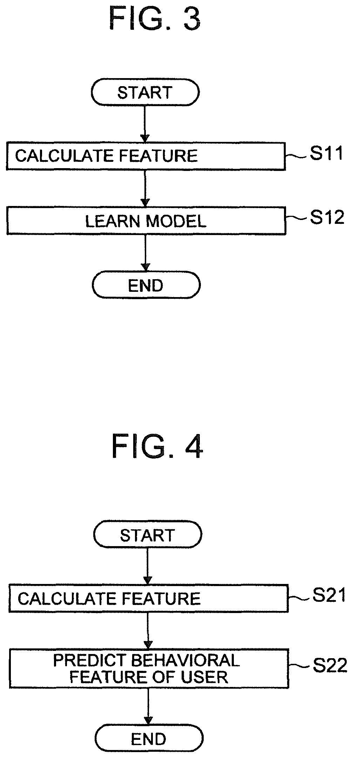

Next, operations of the behavioral characteristic prediction system of the present exemplary embodiment will be described. Fig. 3 depicts a flowchart illustrating exemplary operations of the behavioral characteristic prediction system of the present exemplary embodiment for generating a prediction model.

The feature calculation unit 12 calculates a feature that is likely to influence cancellation by a user based on a communication state log (step S11). The learning device 13 then learns a model representing a behavioral characteristic of the user by using the calculated feature as an explanatory variable (step S12). Specifically, the learning device 13 learns a prediction model for predicting cancellation by the user.

Fig. 4 depicts a flowchart illustrating exemplary operations for performing behavioral characteristic prediction using a prediction model generated by the behavioral characteristic prediction system of the present exemplary embodiment. The feature calculation unit 12 calculates a feature used in the prediction model based on a communication state log of a prediction target user (step S21). The prediction device 14 predicts a behavioral characteristic of the user using the feature generated from the communication state log and the prediction model (step S22).

In the above manner, in the present exemplary embodiment the prediction device 14 predicts the behavioral characteristic of the user based on the feature calculated based on the communication state log and the model representing the behavioral characteristic of the user learned by using the calculated feature as the explanatory variable. This allows for predicting a behavioral characteristic reflecting a service state provided to a user.

Specifically, the feature calculation unit 12 calculates a feature that is likely to influence cancellation by the user based on the communication state log and the learning device 13 learns a model representing a behavioral characteristic of the user using the calculated feature as an explanatory variable. Thereafter the prediction device 14 predicts the behavioral characteristic of the user using the feature generated from the communication state log and the model.

Such a configuration allows the telecommunications company to provide more appropriate service to a user who has clearly expressed an intent of receiving appropriate service using personal information. Also the user is allowed to receive service provision more suited to a demand.

### Second Exemplary Embodiment

Next, an exemplary embodiment that visualizes a prediction result will be described. One of reasons why a user cancels a contract is a performance problem of a base station. This is because when the state of bad connection with a base station continues dissatisfaction of the user is assumed to accumulate. In the exemplary embodiment below, therefore, in order to determine which base station to improve performance a method of the output unit 15 for visualizing relation between a user predicted of cancellation by the prediction device 14 and a base station to which the user is connected will be described.

A configuration of a behavioral characteristic prediction system of the present exemplary embodiment is the same as that of the first exemplary embodiment. In the descriptions below, it is assumed that a prediction device 14 has already performed cancellation prediction of a user. In the descriptions below, a user predicted of cancellation is referred to as a predicted cancellation user.

First, an output unit 15 calculates a score corresponding to connection time with each base station (hereinafter referred to as a connection score) for each predicted cancellation user. The connection score is a value calculated larger as a connection time is longer. The output unit 15 then calculates, for each base station, the total sum of connection scores calculated for each predicted cancellation user.

The output unit 15 outputs information of the base station according to the calculated total sum of connection scores. The output unit 15 may output text information where the total sum of connection scores is associated to the base stations. The output unit 15 may output the base stations displayed superimposed on the map in a mode that varies according to the total sum of connection scores.

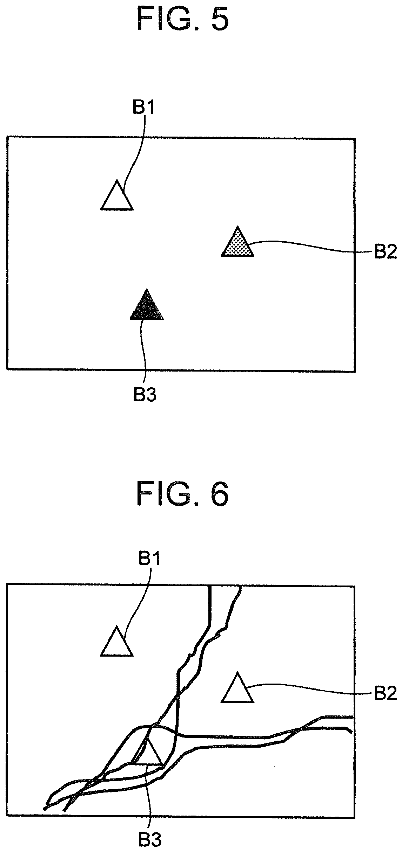

Fig. 5 depicts an explanatory diagram illustrating an example of outputting information of base stations. The output unit 15 outputs the base stations at corresponding positions on a map in an easily recognizable mode. In the example illustrated in Fig. 5, the output unit 15 outputs the base stations in triangles at corresponding positions on the map. In the example illustrated in Fig. 5, the output unit 15 outputs triangles representing the base stations in darker black as the connection score is higher. Note that a mode and color of a base station is not limited the method exemplified in Fig. 5.

Superimposing a base station on a map including information such as buildings and roads and thereby displaying allows for easily grasping situations around the base station. This allows a telecommunications company to easily make a judgement based on geographical restrictions such as whether a new base station can be installed in order to improve performance of the base station or whether performance of the base station itself should be improved.

Note that, in the descriptions of the present exemplary embodiment, the method of the output unit 15 for visualizing a base station performance of which should be improved based on a connection state of a user predicted of cancellation has been described. Note that the output unit 15 may visualize information for judging a base station performance of which should be improved based on a connection state of a user who has already canceled a contract together with the connection state of the user predicted of cancellation or instead of the connection state of the user predicted of cancellation. A method of visualizing based on the connection state of the user who has already canceled a contract is similar to the method of visualizing based on the connection state of the user predicted of cancellation.

Visualizing such information allows a telecommunications company to grasp information of a base station to which many users, who have already canceled a contract, have connected. Therefore, the telecommunications company can judge based on this information whether performance of the base station should be improved. That is, the behavioral characteristic prediction system of the present exemplary embodiment can be applied to usage of investigating a reason for cancellation of a user who has actually canceled a contract.

### Third Exemplary Embodiment

Next, another exemplary embodiment that visualizes a prediction result will be described. A configuration of a behavioral characteristic prediction system of the present exemplary embodiment is also the same as that of the first exemplary embodiment. It is further assumed that a prediction device 14 has already performed cancellation prediction of a user.

For example when the user agrees to disclosure of personal information, transfer history (travelling route) of the user can be specified based on positional information of the user. If the transfer history of the user can be grasped, base stations with which the user is engaged in communication can be estimated. In the present exemplary embodiment, therefore, a travelling route of a predicted cancellation user is output on a map on a screen.

A method of acquiring the travelling route of the predicted cancellation user may be in any way. For example when a communication state log includes positional information and time where and when the user has requested connection, the output unit 15 may specify positional information of the user based on the positional information and the time and output, on a map on a screen, a travelling route connecting the positional information in time series. Moreover, even when the communication state log does not include positional information of the user but the user agrees to disclosure of other information acquired by the GPS, the output unit 15 may specify positional information of the user based on that information.

Fig. 6 depicts an explanatory diagram illustrating an example of outputting base stations and travelling routes of users. The example illustrated in Fig. 6 illustrates that the output unit 15 displays, on a map, base stations represented by triangles and travelling routes of predicted cancellation users. In the example illustrated in Fig. 6, there is a high frequency that the predicted cancellation users travel near a base station B3. Therefore, it is suggested that the base station B3 may influence cancellation by the predicted cancellation users.

As exemplified in Fig. 6, displaying daily travelling routes of the predicted cancellation users on the map on a screen allows for predicting a base station to which the users are connected on a daily basis. Especially, a base station having high frequency of connection from a predicted cancellation user or a base station having long connection time is estimated to be likely to influence cancellation by the user. A telecommunications company can use such a travelling route of a predicted cancellation user as information for judging whether performance of the base station should be improved.

Note that, similarly to the second exemplary embodiment, the output unit 15 may display not only a travelling route of a predicted cancellation user but also a travelling route of a user who has already cancelled a contract. Visualizing such information allows the telecommunications company to grasp a base station near the travelling route of the user who has already canceled a contract, have connected. Therefore, the telecommunications company can judge based on this information whether performance of the base station should be improved. That is, the behavioral characteristic prediction system of the present exemplary embodiment can be applied to usage of investigating a reason for cancellation of a user who has actually canceled a contract.

### Fourth Exemplary Embodiment

Next, still another exemplary embodiment that visualizes a prediction result will be described. A configuration of a behavioral characteristic prediction system of the present exemplary embodiment is also the same as that of the first exemplary embodiment. It is further assumed that a prediction device 14 has already performed cancellation prediction of a user.

A base station near an address of a user is estimated to have a high frequency of request from the user for connection thereto and thus is estimated to have long connection time. The output unit 15 of the present exemplary embodiment, therefore, outputs information representing a base station at a corresponding position on a map in addition to outputting information representing a predicted cancellation user at a position on the map corresponding to the address.

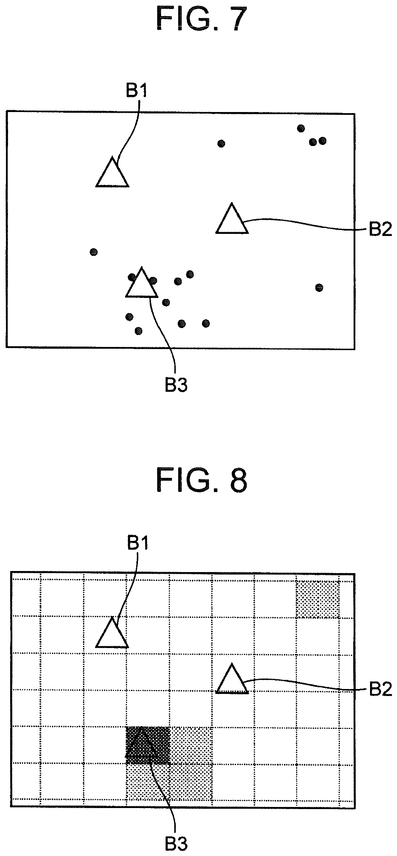

Fig. 7 depicts an explanatory diagram illustrating an example of outputting relation between base stations and addresses of users. The example illustrated in Fig. 7 illustrates that base stations are output in triangles at corresponding positions on a map on a screen and positions corresponding to the addresses of predicted cancellation users are output in dots.

Note that, in order to handle the case of increased prediction target users, the output unit 15 may divide the map into a plurality of areas and display each of the areas in a mode corresponding to the number of prediction target users having an address corresponding to the area.

Fig. 8 depicts an explanatory diagram illustrating another example of outputting relation between base stations and addresses of users. The example illustrated in Fig. 8 illustrates that the output unit 15 calculates the number of prediction target users for each of the areas divided on the map and that the area is displayed in darker halftone dots as the calculated number is greater.

Such display allows the telecommunications company to estimate a base station likely to be connected by a user predicted on cancellation. Therefore, the telecommunications company can judge based on this information whether performance of the base station should be improved.

Note that, similarly to the second exemplary embodiment, the output unit 15 may output not only the number of predicted cancellation users but also relation between the base station and the address of the user using the number of users who has already cancelled a contract. Visualizing such information allows for grasping a base station near an area where many users who have already canceled a contract lives. Therefore, whether performance of the base station should be improved can be judged based on this information. That is, the behavioral characteristic prediction system of the present exemplary embodiment can be applied to usage of investigating a reason for cancellation of a user who has actually canceled a contract.

Note that in any of the second exemplary embodiment to the fourth exemplary embodiment, the output unit 15 may display a base station in a mode that varies according to a degree of tightness of a frequency band. The output unit 15 may, for example, display an outer frame of a base station having a high degree of tightness in a broken line while displaying a base station having a low degree of tightness in a solid line. Further outputting such information allows for visually grasping relation between the degree of tightness of a frequency band and the number of cancellation.

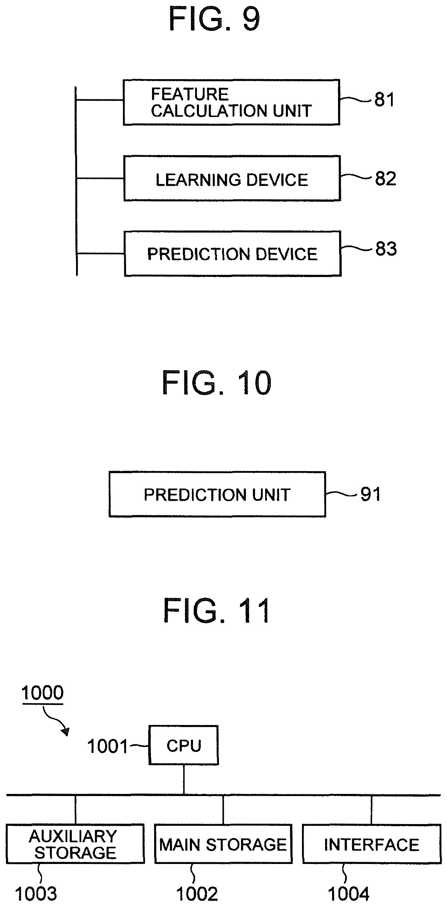

Next, an overview of the present invention will be described. Fig. 9 depicts a block diagram illustrating an overview of a behavioral characteristic prediction system of the present invention. A behavioral characteristic prediction system according to the present invention includes: a feature calculation unit 81 (for example the feature calculation unit 12) that calculates a feature that is likely to influence cancellation by a user (for example a customer) based on a communication state log (for example a CTL) that indicates a communication state of a base station when the user has been engaged in communication or making a call; a learning device 82 (for example the learning device 13) that learns a model representing a behavioral characteristic of the user by using the calculated feature as an explanatory variable; and a prediction device 83 (for example the prediction device 14) that predicts the behavioral characteristic of the user (for example cancellation by the user) using the feature generated from the communication state log and the model.

Such a configuration allows for performing behavioral characteristic prediction reflecting a service state provided to a user. The telecommunications company can therefore suppress cancellation by a user while the user can receive better service provision.

Furthermore, the feature calculation unit 81 estimates in time series a base station to which connection is made from the transfer history or the connection history of the user and calculates, as the feature (e.g. the second feature), time series information of a communication state of the base station in a time period during which the base station is estimated as being connected to or a statistic of the collected time series information.

The feature calculation unit 81 specifies a series of service that the user is engaged in and calculates, as the feature (e.g. the third feature), time series information of a communication state with respect to the specified service or a statistic of the collected time series information.

The feature calculation unit 81 may calculate, as the feature, (for example the fourth feature) a statistic of collected time periods during which each of the users has failed in communication with a base station.

The prediction device 83 may perform cancellation prediction of a user. The behavioral characteristic prediction system may include an output unit (for example the output unit 15 of the second exemplary embodiment to the fourth exemplary embodiment) that visualizes relation between a user predicted of cancellation (for example a predicted cancellation user) by the prediction device 83 and a base station to which the user is connected. Such a configuration allows for visually judging a base station performance of which should be improved.

Note that the feature calculation unit 81 may calculate, as a feature, (for example the first feature), a statistic of collected communication states of a base station when each user has been engaged in communication or making a call.

Fig. 10 depicts a block diagram illustrating an overview of a behavioral characteristic prediction device of the present invention. The behavioral characteristic prediction device according to the present invention includes a prediction unit 91 (for example the prediction device 14) that predicts a behavioral characteristic of a user based on the feature calculated based on the communication state log that indicates a communication state of a base station when the user has been engaged in communication or making a call and a model representing a behavioral characteristic of the user learned by using the calculated feature as an explanatory variable.

Such a configuration also allows for performing behavioral characteristic prediction reflecting a service state provided to a user.

Note that the behavioral characteristic prediction device exemplified in Fig. 10 can use any one or more of the features (for example, the first feature to the fourth feature) calculated by the feature calculation unit 81 of the behavioral characteristic prediction system exemplified in Fig. 9. The behavioral characteristic prediction device may predict a behavioral characteristic using a feature produced from a CDR or a user attribute data as illustrated in the exemplary embodiments described above.

Fig. 11 depicts a block diagram illustrating an overall configuration of a computer. A computer 1000 includes a CPU 1001, a main storage 1002, an auxiliary storage 1003, and an interface 1004.

The behavioral characteristic prediction system described above is implemented by one or more computers 1000. The behavioral characteristic prediction system according to the present invention may be configured by one device or may be configured by two or more physically separate devices connected in a wired or wireless manner.

Operations of each of the processors described above are stored in the auxiliary storage 1003 in the form of a program (behavioral characteristic prediction model learning program or behavioral characteristic prediction program). The CPU 1001 reads the program from the auxiliary storage 1003, deploys the program in the main storage 1002, and thereby executes the above processing according to the above program.

Note that in at least one of the exemplary embodiments the auxiliary storage 1003 is an exemplary non-transitory physical medium. Other examples of the non-transitory physical medium include a magnetic disc, a magneto-optical disk, a compact disc read only memory (CD-ROM), a digital versatile disk read only memory (DVD-ROM), and semiconductor memory that are connected via the interface 1004. When the program is alternatively distributed to the computer 1000 by a communication line, the computer 1000 distributed with the program may deploy the program in the main storage 1002 and thereby execute the processing.

The program may implement a part of the functions described above. The program may implement the aforementioned functions in combination with another program already stored in the auxiliary storage 1003, that is, as a differential file (differential program).

The present invention has been described above with reference to the exemplary embodiments and the examples; however, the present invention is not limited to the above exemplary embodiments or the examples. The configuration or details of the present invention may include various modifications that can be understood by a person skilled in the art within the scope of the present invention.

This application claims priority based on U.S. Provisional Patent Application No. 62/031,296, filed on July 31, 2014, discloser of which is incorporated herein in its entirety.

### Reference Signs List

- 11: Learning data storage unit
- 12: Feature calculation unit
- 13: Learning device
- 14: Prediction device
- 15: Output unit

## Claims

1. A behavioral characteristic prediction system, comprising:
a feature calculation unit that calculates a feature that is likely to influence cancellation by a user based on a communication state log that indicates a communication state of a base station when the user has been engaged in communication or making a call;
a learning device that learns a model representing a behavioral characteristic of the user by using the calculated feature as an explanatory variable; and
a prediction device that predicts the behavioral characteristic of the user using the feature generated from the communication state log and the model.

2. The behavioral characteristic prediction system according to claim 1,
wherein the feature calculation unit estimates in time series a base station to which connection is made from transfer history or connection history of the user and calculates, as the feature, time series information of a communication state of the base station in a time period during which the base station is estimated as being connected to or a statistic of the collected time series information.

3. The behavioral characteristic prediction system according to claim 1 or claim 2, wherein the feature calculation unit specifies a series of service that the user is engaged in and calculates, as the feature, time series information of a communication state with respect to the specified service or a statistic of the collected time series information.

4. The behavioral characteristic prediction system according to any one of claims 1 to 3, wherein the feature calculation unit calculates, as the feature, a statistic of collected time periods during which each of the users has failed in communication with a base station.

5. The behavioral characteristic prediction system according to any one of claims 1 to 4, wherein the prediction device performs cancellation prediction of the user,
the behavioral characteristic prediction system further comprising:
an output unit that visualizes relation between the user predicted of cancellation by the prediction device and a base station to which the user is connected.

6. A behavioral characteristic prediction device, comprising:
a prediction unit that predicts a behavioral characteristic of a user based on a feature calculated based on a communication state log that indicates a communication state of a base station when the user has been engaged in communication or making a call and a model representing a behavioral characteristic of the user learned by using the calculated feature as an explanatory variable.

7. A method of learning a behavioral characteristic prediction model, comprising the steps of:
calculating a feature that is likely to influence cancellation by a user based on a communication state log that indicates a communication state of a base station when the user has been engaged in communication or making a call; and
learning a prediction model by using the calculated feature as an explanatory variable and a behavioral characteristic of the user as an objective variable.

8. The method of learning behavioral characteristic prediction according to claim 7, the method comprising the steps of:
estimating in time series a base station to which connection is made from transfer history or connection history of the user; and
calculating, as the feature, time series information of a communication state of the base station in a time period during which the base station is estimated as being connected to or a statistic of the collected time series information.

9. A method of predicting a behavioral characteristic, comprising the step of:
predicting a behavioral characteristic of a user based on a feature calculated based on a communication state log that indicates a communication state of a base station when the user has been engaged in communication or making a call and a model representing a behavioral characteristic of the user learned by using the calculated feature as an explanatory variable.

10. A behavioral characteristic prediction model learning program for causing a computer to execute:
feature calculation processing for calculating a feature that is likely to influence cancellation by a user based on a communication state log that indicates a communication state of a base station when the user has been engaged in communication or making a call;
learning processing for learning a prediction model by using the calculated feature as an explanatory variable and a behavioral characteristic of the user as an objective variable; and
output processing for outputting the prediction model that predicts the behavioral characteristic of the user using the feature generated from the communication state log.

11. The behavioral characteristic prediction learning program according to claim 10,
wherein the program causes a computer to estimate in time series a base station to which connection is made from transfer history or connection history of the user and to calculate, as the feature, time series information of a communication state of the base station in a time period during which the base station is estimated as being connected to or a statistic of the collected time series information in the feature calculation processing.

12. A behavioral characteristic prediction program for causing a computer to execute:
prediction processing for predicting a behavioral characteristic of a user based on a feature calculated based on a communication state log that indicates a communication state of a base station when the user has been engaged in communication or making a call and a model representing a behavioral characteristic of the user learned by using the calculated feature as an explanatory variable.
